# EUROPEAN PATENT APPLICATION

(11) **EP 2 416 260 A1**
(43) Date of publication of application: **08.02.2012**
(21) Application number: 10193381.0
(22) Date of filing: 01.12.2010
(51) Int. Cl.: G06F 17/30

(54) **System and method for synchronizing media files and associated media art**

(30) Priority: 03.08.2010 US 370352 P
(71) Applicant: Research In Motion Limited, Waterloo, ON N2L 3W8 (CA)
(72) Inventor: Manley, Christopher Adam, Kanata Ontario K2K 2A5 (CA); Agampodi, Thusha, Kanata Ontario K2K 2A5 (CA)
(74) Representative: Fennell, Gareth Charles

(57) **Abstract**

A method and apparatus for synchronizing media files and media art of electronic devices is provided. The apparatus includes a processor, at least one computer readable medium, an electronic device media library, and at last one program module. The program module stored is operable, upon execution by the processor to display, on a display of the management device, a graphical user interface displaying a management device media library. The program module is also operable to receive at least one media file from the management device media library and store the at least one media file in the electronic device media library. The program module is further operable to determine whether media art is associated with the at least one media file and retrieve the associated media art from a media source if no media art is associated with the at least one media.

## Description

### CROSS-RELATED APPLICATIONS

This application claims the benefit of U.S. Provisional Application No. 61/370,352, filed on August 3, 2010, which is incorporated herein by reference in its entirety.

### FIELD

This disclosure, in a broad sense, is directed toward the synchronization of electronic devices, and specifically to a system and method for synchronizing media files and associated media art of electronic devices.

### BACKGROUND

With the advent of more robust electronic systems, advancements of electronic devices are becoming more prevalent. Electronic devices can provide a variety of functions including, for example, telephonic, audio/video, and gaming functions. Electronic devices can include, but are not limited to, mobile stations such as cellular telephones, smart telephones, portable gaming systems, portable audio players, portable audio and video players, electronic writing or typing tablets, handheld messaging devices, personal digital assistants, and handheld computers.

Electronic devices allow users to have an integrated device which can perform a variety of different tasks. For example, a mobile electronic device can be enabled for each of or some of the following functions: voice transmission (cell phones), text transmission (pagers and PDAs), sending and receiving data for viewing of Internet websites, multi-media messages, videography and photography, and playback of media content, such as movies, videos, music, or any other similar multimedia content. Additionally, mobile electronic devices can be enabled to connect to another electronic device, such as a desktop computer, to receive information, such as files and settings, from the desktop computer. In other words, mobile electronic devices can be enabled for synchronization with other electronic devices.

Synchronizing electronic devices, such as mobile electronic devices and desktop computers, has become commonplace as people have become used to the portability of information. Synchronization of electronic devices generally includes updating and transferring one or more files from a desktop computer to the mobile electronic device, updating and transferring one or more files from the mobile electronic device to the desktop computer, or both. For example, the desktop computer may contain a multimedia application that contains playlists of songs/videos etc., that can be synchronized with the mobile electronic device, such that at least some of the playlists/songs/videos etc. are the same at both electronic devices. If the playlists etc. at the desktop computer have been updated between synchronizations, at the next synchronization the updated playlists/songs/videos etc. are downloaded to the mobile electronic device. The configuration files can instruct a synchronization application of which playlists to update during synchronization.

However, changes to the files stored on the desktop computer can be made when the mobile electronic device is uncoupled from the desktop computer. For example, if preferences regarding which playlists to synchronize change between synchronizations, then a user must wait until the establishment of a synchronization session to make changes to the configuration files. However, this paradigm is generally lacking in versatility, and furthermore demands that a strain be put on the system resources of the desktop computer as it simultaneously processes communications with the mobile electronic device and updates to the configuration files.

### BRIEF DESCRIPTIONS OF THE DRAWINGS

Embodiments of the present application will now be described, by way of example only, with reference to the attached figures, wherein:

Figure 1 is a block diagram of a system for synchronizing media files and media art on electronic devices, according to non-limiting embodiments;

Figure 2 is an illustration of an exemplary Graphical User Interface (GUI) for synchronizing media files and media art on electronic devices;

Figure 3 is a flow chart illustrating an exemplary embodiment of a method for synchronizing media files and media art on an electronic device;

Figure 4 is a flow chart illustrating an alternative embodiment of a method for synchronizing media files and media art on an electronic device;

Figure 5 is an exemplary graphical user interface displayed on the display of a management device configured to synchronize media files and media art of the management device with the media files and media art on an electronic device;

Figure 6 is an exemplary display of an electronic device configured to synchronize media files and media art of the electronic device with media files and media art from a management device; and

Figure 7 is a block diagram representing configured to synchronize media files and media art interacting in a communication network in accordance with an exemplary embodiment of the present disclosure.

### DETAILED DESCRIPTION

As will be appreciated for simplicity and clarity of illustration, where appropriate, reference numerals have been repeated among the different figures to indicate corresponding or analogous elements. In addition, numerous specific details are set forth in order to provide a thorough understanding of the implementations described herein. However, those of ordinary skill in the art will understand that the implementations described herein can be practiced without these specific details. In other instances, methods, procedures and components have not been described in detail so as not to obscure the related relevant feature being described. Also, the description is not to be considered as limiting the scope of the implementations described herein.

Several definitions that apply throughout this disclosure will now be presented. The word "coupled" is defined as connected, whether directly or indirectly through intervening components and is not necessarily limited to physical connections. The term "communicatively coupled" is defined as connected whether directly or indirectly though intervening components, is not necessarily limited to a physical connection, and allows for the transfer of data. The term "mobile electronic device" is defined as any electronic device that is capable of at least accepting information entries from a user and includes the device's own power source. Examples of mobile electronic devices include but are not limited to a personal digital assistant (PDA), a cellphone, a smartphone, a tablet, a portable MP3 player, a portable video player, a portable audio player, a laptop, or any other electronic device that can store and receive data files such as Media files and media art associated with the media files. The term "wireless communication" means communication that occurs without wires using electromagnetic radiation. The term "media" is defined as visual, audio, or combined visual and audio data which can be outputted by a mobile device. For example, media can include video files, audio tracks, multimedia files, music files, songs, movies, animations, graphics, MIDI files, or any other media file which can be played or outputted by a mobile device. The term "highlight" refers to altering the appearance of a graphical item displayed on the display screen to indicate that the graphical item has been selected for execution. For example, highlighting can include changing the color of the graphical item, changing the font or appearance of the graphical item, applying a background color to the graphical, item, superimposing a block of semi-transparent color over the graphical item, placing a border around the graphical item, enlarging the graphical item as compared to other graphical items proximate to the highlighted graphical item, or other similar and known method of highlighting graphical items or text items display on a display screen. The term "memory" refers to transitory memory, Random Access Memory (RAM) and non-transitory memory. For example, non-transitory memory can be implemented as flash memory, ferromagnetic, phase-change memory, and other non-transitory memory technologies.

The term "management device" is defined as any electronic device having a display and its own source that will provide files to another electronic device connected thereto for synchronization. Examples of a management device include a desktop computer, a laptop computer, a netbook, a computing tablet, a second mobile electronic device, or any other electronic device which can store and transfer media files and media art associated with the media files to another electronic device. The term "media art" refers to a graphic file associated with a media file. For example, media art can include album art, cover art, movie art, a video screenshot, or any other graphic file that is displayed when the media file is played or is listed in a library, database, or menu. The term "media source" refers to resource of media and media art that can be external to or local to an electronic device. For example, a media source can be a media management application (e.g., iTunes™, Windows Media Player™, Rhapsody™, etc.), an internet site, an internet database, a file sharing server, a remote server, a memory associated with a management device, a web-based server, or any other similar media source.

Electronic devices enabled for media playback and synchronization with another electronic device, such as a management device, allow a user to transfer at least some files from the management device to an electronic device communicatively connected thereto. For example, synchronizing the electronic device with a management device can include transferring, unloading, or downloading one or more media files stored in a library of the management device to a library of the electronic device connected to the management device. In some instances, the media file can include a media art, such as a cover art, album art, movie screenshot, or other graphic associated with the media art file. The media art can be embedded in the media file but is often embedded in a tag or metadata of the media file or is a separate media art file associated with the media file. When synchronizing the library of the electronic device with the library of the management device, the media files can be transferred from the management device to the electronic device, but the media art may not be transferred. In order to transfer media art along with the media file to the electronic device additional steps are required. For example, a prompt is typically presented on the electronic device or the management device asking the user if media art is associated with the media file to be transferred or if the user desires to retrieve media art associated with the media file. Upon receipt of a response input to the prompt, the media art can be retrieved from a media source and transferred to the electronic device. Alternatively, if media art has not been received or associated with the media file, the electronic device can download the media file without verification of whether media art is missing. In another implementation, the electronic device may not automatically retrieve a missing media art associated with the media file if a no media art has been associated with the media file. In other instances, when a management device retrieves media art, the media art retrieval takes effect on the entire library of the management device, rather than retrieving the media art of the files that had been missing media art.

In other instances, the media art retrieval retrieves media art for all files in the library of the management device, even if only the media art of a subset of the files is desired. Also, if new media files are added to the management device library after the media art of the library of the management device has been retrieved, the new media files are not scanned for associated media art, and media art is not retrieved for the new files, until an input is received by the management device to do so. Therefore, the library of the management device can include some media files with associated media art and some files that do not have associated media art. Thus, when the electronic device and the management device are synchronized, the electronic device will also include some media files that do not have associated media art. Seamless transferring media files from a management device to an electronic device, along with the associated media art, is desirable, as the synchronization of the management device and the electronic device is simplified and made more efficient since fewer steps are required to transfer the media files along with the associated media art.

The system and method for synchronizing media files and media art on an electronic device includes an electronic device configured to be communicatively coupled with a management device. The management device can be a computing device from which the electronic device can receive media files. The management device can have a management device library having a storage or database of media files. The electronic device has a processor and at least one computer readable medium communicatively coupled to the processor. An electronic device media library can be stored on the at least one computer readable medium.

The electronic device media library can be a storage or database of media files stored on the electronic device. The electronic device can also include at least one program module stored on the at least one computer readable medium. The at least one program module can be operable, upon execution by the processor to display, on a display of the management device, a graphical user interface displaying the management device media library. The program module can also be operable to receive at least one media file from the management device media library and store the at least one media file in the electronic device media library. Alternatively, the program module can also be operable to perform an indirect transfer of the at least one media file from the management device media library to the electronic device media library. For example, the program module can supply a directory or file link to the media file providing the processor of the electronic device a location in the memory to retrieve the media file for playback. The program module can further be operable to determine whether media art is associated with the at least one media file. If the program module determines that no media art is associated with the at least one media file, the program module can be operable to transfer the associated media art from a media source associated with the management device and to store the associated media art in a memory of the electronic device. The program module can either directly transfer or indirectly transfer the associated media art from the management device to the electronic device. A direct transfer can include uploading and storing the media art to a memory of the electronic device. An indirect transfer can include associating a link or directory location with the media art, thereby providing the processor and the media playback application with the location of the associated media art to be displayed when the media file is played back on the electronic device.

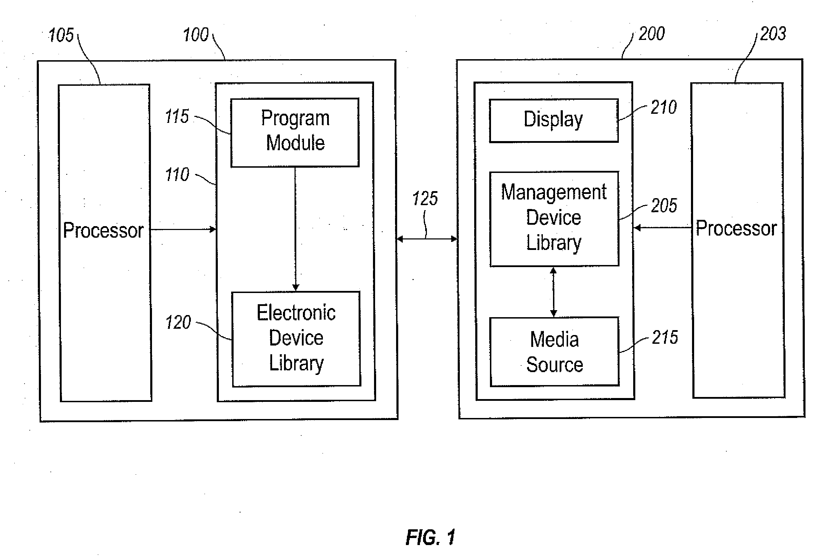

Figure 1 is a block diagram illustrating an exemplary embodiment of a system for synchronizing files on a first electronic device 100, such as a mobile electronic device when a second electronic device 200 that is a management device is in communication with the first electronic device 100. The electronic device 100 and the management device 200 synchronize via a link 125. The link 125 can be wireless or wired, as desired. The link 125 can further comprise any suitable communication network. For example the link 125 can be a Bluetooth™ connection, a wired USB connection, or any other connection that provides communication between the electronic device 100 and the management device 200. Synchronization can occur between the electronic devices 100, 200 periodically, when communications are initialized, when triggered by a user of the electronic device 100 or the management device 200, or any combination thereof. In general, during synchronization, specific data present at each of the electronic device 100 and the management device 200 can be resolved such that similar versions of at least some of the data are present on both of the electronic device 100 and the management device 200. Such synchronization can comprise at least one of: downloading data to the electronic device 100 from the management device 200; uploading data to the electronic device 100 from the management device 200; deleting data from at least one of the electronic device 100 and the management device 200, or any combination thereof.

The management device 200 can be a desktop computer, a laptop, a network server, a database server, an internet server, a computer having a media management software application, or' any other similar computing device. In the embodiment illustrated in Figure 1, the management device 200 includes a display 210, a management device library 205, and a media source 215. The management device 200 can also include a management device processor 203 coupled to the management device 200 to operate and transmit instructions to applications and programs stored on the management device 200. The management device library 205 can be a database or a storage of media files and data files that can be transferred to another device. The management device library 205 can be stored on a memory of the management device 200, such as a hard disk drive, a flash drive, an external drive, or any other similar memory. The media source 215 can be a database or any other electronic storage of media files and media art associated with the media files. For example, the media source 215 can be a media management application, an internet site, a local memory stored on the management device, or any other media source from which the electronic device 100 can retrieve media files and media art. The display 210 can be a liquid crystal display (LCD), a light emitting diode (LED) display, an organic light emitting diode (OLED) display, a plasma screen display, or any other display screen or monitor which can display graphical images or graphical user interfaces.

The management device 200 can be enabled to communicate with the electronic device 100 via the link 125. For example, if the link 125 comprises a wireless link, the management device 200 can be enabled to communicate with the electronic device 100 wirelessly, using any suitable protocol. Alternatively, if the link 125 comprises a wired link, then the management device 200 can be enabled to communicate via a wired link, using any suitable wired protocol.

The electronic device 100 can be a mobile device, a netbook, a portable media player, an electronic tablet, a laptop computer, or any other similar electronic device that can be communicatively coupled to a management device for synchronizing media files and media art therebetween. In the particular embodiment illustrated in Figure 1, the first electronic device 100 comprises a processor 105 communicatively coupled to a computer readable medium 110. The computer readable medium can be a memory, such as random access memory (RAM), removable memory, memory cards, hard disks, or any other similar memory. A program module 115 and an electronic device library 120 can be stored on the computer readable medium 110. The electronic device library 120 can be a storage or a database for media files, playlist files associated with the media files, data files, or any other similar files which can have media or graphical art associated therewith, that will be utilized on the electronic device 100. The program module 115 has access to the electronic device library 120 and can be operable upon execution by the processor 105 to display, on the display 210 of the management device 200, a graphical user interface displaying a management device media library 205; receive at least one media file from the management device media library 205; store the at least one media file in the electronic device media library 120; determine whether media art is associated with the at least one media file; and provide the associated media art from a media source 215 in response to the determination that no media art is associated with the at least one media file.

The electronic device 100 can also be in communication with any suitable input device (not shown), or combination of input devices, including but not limited to a keyboard, a pointing device, a mouse, a trackball, a touchscreen, a touchpad, and any other similar device from which an operator of the electronic device can enter inputs. The electronic device 100 is generally enabled to receive input data from the input device for processing by the processor 105.

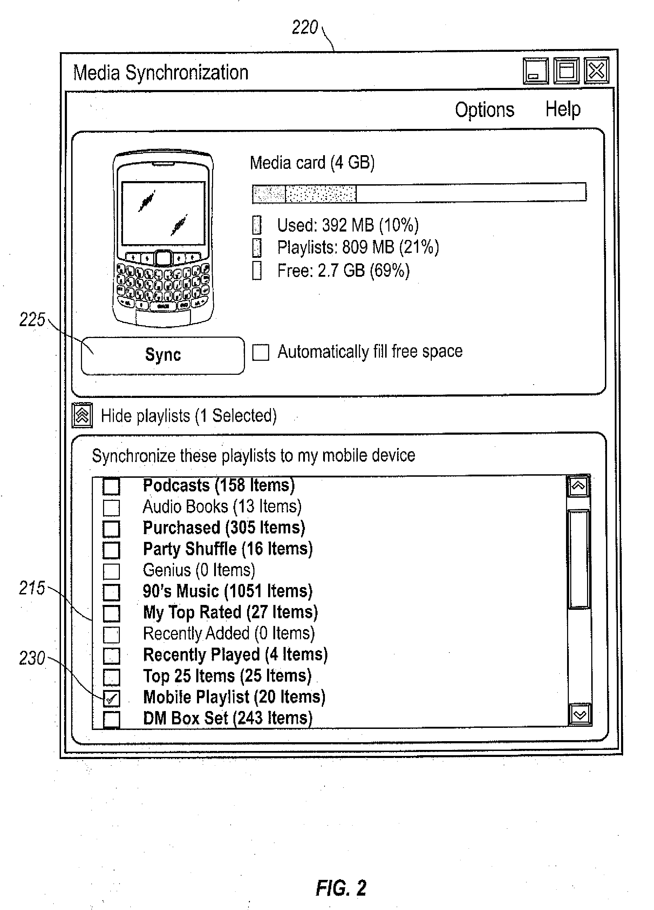

Figure 2 is a screenshot of a graphical user interface displayed on the management device 200 in accordance with an exemplary embodiment of the system and method of synchronizing media, files and media art. When the electronic device 100 is connected to the management device 200, the processor 105 of the electronic device 100 can instruct the program module 115 to, display the graphical user interface 220 on the display 210 of the management device 200. The graphical user interface 220 of Figure 2 includes a graphical depiction of the management device library 215 of the management device 200. In the particular embodiment illustrated, the management device library 215 includes a list of playlists of media files. For example, playlists can be a collection of media files chosen by the operator of the management device or by an algorithm executed by the management device. The playlist can be a collection or group of media files having the same genre, having the same purchase date, having the same artist, having similar media file titles, being the most frequently played media files, media files selected by the operator according to a desired grouping, or any other grouping of files. From the graphical user interface 220, the operator of the electronic device 100 can select which media files to transfer from the management device 200 to the electronic device 100. In Figure 2, the media files can be selected by selecting a checkbox 230 associated with the media file. In alternative embodiment, the media file can be selected by highlighting the media file to be transferred to the electronic device 100, double clicking the desired media file, right clicking on the desired media file, or any other type of selection.

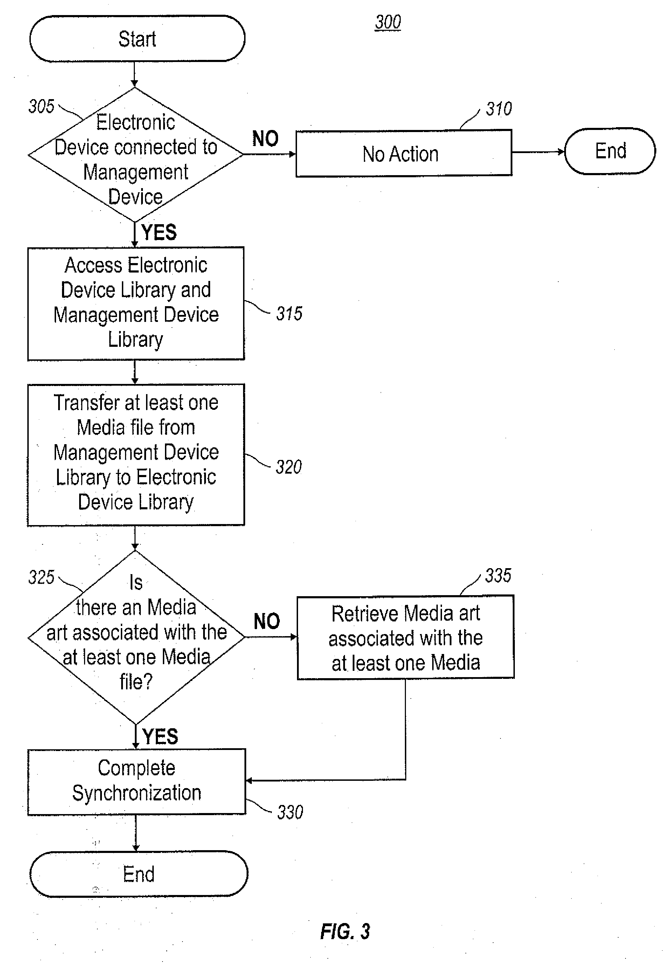

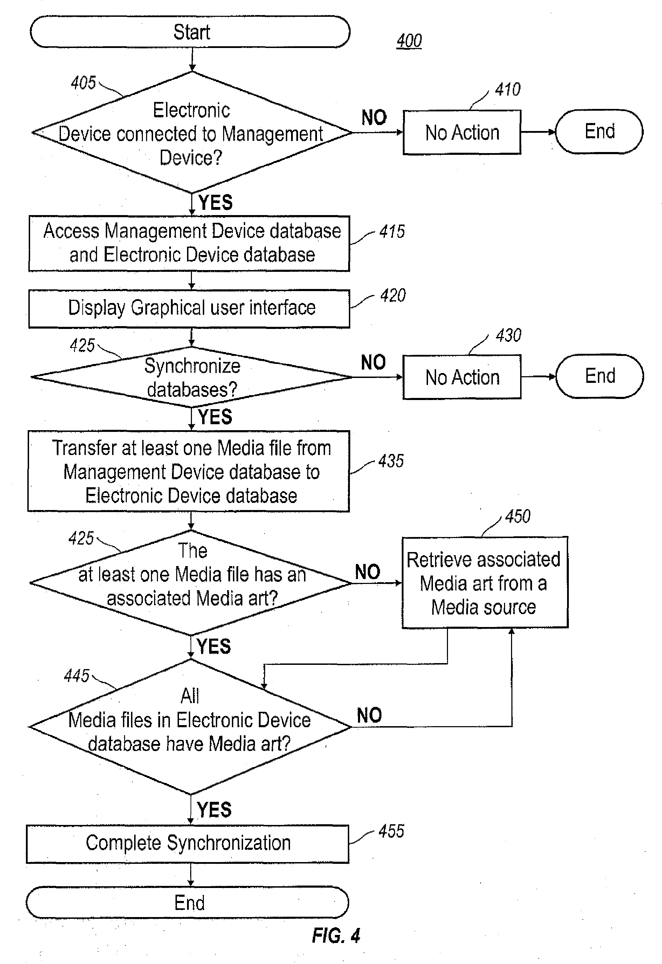

The graphical user interface 220 can include a user-selectable option 225 to synchronize the media files of the management device 200 with the electronic device 100. In Figure 2, the user-selectable option 225 is a button bearing the phrase "Sync." Upon selection of the user-selectable option 225, the media files of the management media library 215 selected for synchronization can be transferred from the management media library 215 to the electronic device media library 120. In the illustrated example, the Blackberry Curve playlist is selected and has twenty items or media files in the playlist. When the user-selectable option 225 is selected, the twenty media files in the selected playlist 230 are transferred to the electronic device media library 120. Details of the method for synchronizing the media files and media art on an electronic device 100 with a management device 200 are described below in relation to Figures 3 and 4.

Figure 3 is a flow chart of an exemplary embodiment of the method 300 of synchronizing media files and media art on an electronic device 100. In Figure 3, a detection is made that the electronic device 100 is coupled to the management device 200 (block 305). The detection can be made by one or more processors 105 coupled to the electronic device 100 or the management device 200. The detection can be a detection that a link 125, such as a wireless connection or wired connection, has been made between the electronic device 100 and the management device 200. If no connection between the electronic device 100 and the management device 200 is detected, the processor 105 of the electronic device 100 will take no action to synchronize media files between the electronic device 100 and the management device 200 (bock 310). Alternatively, if a coupling, such as a direct or indirect connection, is detected, the electronic device 100 can access the electronic device library 120 and the management device library 205 (block 315). Additionally, the processor 105 of the electronic device 100 can execute instructions to the electronic device 100 to display a graphical user interface on the display 210 of the management device 200. For example, the graphical user interface can display the management device library 205 and a user-selectable option 225 to synchronize the management device library 205 and the electronic device library 120.

At block 320, a processor 203 of the management device 200 can transfer at least one media file from the management device library 205 to the electronic device library 120. At block 320, the electronic device 100 receives the at least one media file from the management device library 205. The at least one media is added to the electronic device library 120 and can be stored in a memory associated with the electronic device 100. For example, the media file can be stored on a local cache of the electronic device 100, a memory card or disk coupled to the electronic device, a hard drive memory of the electronic device, or any other similar memory associated with the electronic device. Alternatively, the processor 105 of the electronic device 100 can associate a directory location or link to a memory with the at least one media file, thereby providing a location on a memory associated with the electronic device 100 from which the electronic device library 120 can retrieve the at least one media file for playback.

While transferring the at least one media file from the management device library 205 to the electronic device library 120, the electronic device 100 can determine whether there is a media art associated with the at least one media (block 325). This determination can be performed by the processor 105 or a program module 115. In alternative embodiments, the determination of whether there is media art associated with the at least one media can occur before the at least one media file is transferred to the electronic device 100, after the at least one media file is transferred to the electronic device 100, or concurrently with the transfer of the at least one media file to the electronic device 100. If there is a media art associated with the at least one media file, the electronic device 100 completes synchronization (block 330). When synchronization is completed, the at least one media file from the management device 200 has been successfully transferred to the electronic device 100 along with the media art associated with the at least one media file. In one embodiment, a copy of the media file from the management device library 205 is transferred to the electronic device 100. In other embodiments, the actual media file from the management device library 205 can be removed from the management device library 205 and saved to the electronic device library 115. In such an embodiment, the management device 200 no longer has a copy of the media file.

If, however, no media art is associated with the at least one media file, a determination is made that the media art is missing. The determination can be made by the processor 105 or the program module 115 of the electronic device 100. The missing media art associated with the at least one media file can be retrieved and transferred to the electronic device along with the at least one media file (block 335). The processor 105 of the electronic device 100 can execute instructions to the electronic device 100 to retrieve the missing media art from a media source 215, as described above. Exemplary media sources 215 can include an internet site, an internet server, a media management application, or any other media source that has media art that are associated with media files, Alternatively, the processor 105 can transmit instructions to the management device 200 to retrieve the media art from a media source 215 and transfer the media art to the electronic device 100. In another example, the processor 105 of the electronic device 100 can execute instructions to launch or run the media management application on the management device 200 that manages the management device library 205. The processor 105 can then retrieve the missing media art.

When the media art is retrieved, the media art can then be transferred to and received by the electronic device 100 to complete synchronization (block 330). The retrieved missing media art can be added to the electronic media library 120 and stored in a local memory associated with the electronic device 100. For example, the media art can be stored in the same memory as the media files of the electronic device library 120, in a memory different from the one having the media files, in a local cache, on a removable memory card, in a flash memory, or any other similar memory. As a detection of missing media art results in a retrieval of the missing media art when media files are transferred to the electronic device 100, fewer steps are required to synchronize the media files and media art between the electronic device 100 and the management device 200. The operator of the electronic device 100 does not need to manually request that missing media art be retrieved and does not need to execute a separate synchronization of the media art. In Figure 3, the synchronization of the media files and media art of the electronic device 100 and the management device 200 can be automatic when a connection is detected between the electronic device 100 and the management device 200. Alternatively, the operator of the electronic device 100 and the management device 200 can enter an input at the electronic device 100 or the management device 200 to begin the synchronization of the media files and the media art, as will be described in more detail below in relation to Figure 4.

Figure 4 illustrates a flow diagram of an alternative embodiment a method 400 of synchronizing media files and media art on an electronic device 100. The method 400 illustrated in Figure 4 is similar to the method 300 illustrated in Figure 3 in that the method 400 includes a detection of whether the electronic device 100 is coupled, either directly or indirectly, to the management device 200 (block 405). If no connection is detected, no action is taken (block 410). If a coupling is detected, the management device database 205 and the electronic device database 120 are accessed (block 415) and a graphical user interface is displayed (block 420) on the display 210 of the management device 200. The graphical user interface 220 can be the same as the one illustrated in Figure 2. Alternatively, the graphical user interface 220 can also display the electronic device database 115. Additionally, the graphical user interface 220 can display prompt to the operator of the electronic device 100 and the management device 200, requesting an input from the operator that is indicative of a request to synchronize the electronic device database 115 with the management device database 205.

The method 400 differs from the method 300 of Figure 3, in that the method does not automatically synchronize the management device 200. Instead in Figure 4, synchronization of the media file begins after an input has been entered by the operator of the management device 200 and the electronic device 100 requesting that synchronization begin (block 425). For example, the operator can select a user-selectable option 225 displayed on the display 210 of the management device 200 to begin synchronization. Alternatively, the user-selectable option 225 can be displayed on a display of the electronic device 100. If no input is received to synchronize the Electronic device database 115 and the management device database 205, no action is taken by the processor 105 of the electronic device 100 (block 430).

If, however, an input is received to synchronize the electronic device database 115 and the management device database 205, synchronization begins and at least one media file from the management device database 205 is transferred to the electronic device database 115 (block 435). As described above, the at least one media file is added to the electronic device database 115 and stored on a memory associated with the electronic device 100.

Similar to the method 300 illustrated in Figure 3, the method 400 illustrated in Figure 4 determines whether the at least one media file has an associated media art (block 440). If media art is associated with the media file, the media art and the media file are received by the electronic device 100 and added to the electronic device database 115. If the at least one media file has media art associated therewith, synchronization continues to the next step (block 445), as will be described below. If, however, the at least one media file does not have a media art associated therewith, the processor 105 of the electronic device 100 can retrieve the missing associated media art from a media source (block 450), as described above. After the missing media art is retrieved, the media art is received by the electronic device 100 and added to the electronic device database 115. In at least one embodiment, the media art can be received by the electronic device 100 and stored to a local memory associated with the electronic device 100.

After block 440 or 450, a determination is made as to whether all the media files in the electronic device database 115 each have media art associated with a media file (block 445). If all the media files do not have media art associated therewith, the processor 05 of the electronic device 100 retrieves the missing media art from a media source (block 450). If all the media files have media art associated therewith, synchronization is completed (block 455), and the electronic device 100 and the management device 200 can be disconnected from each other.

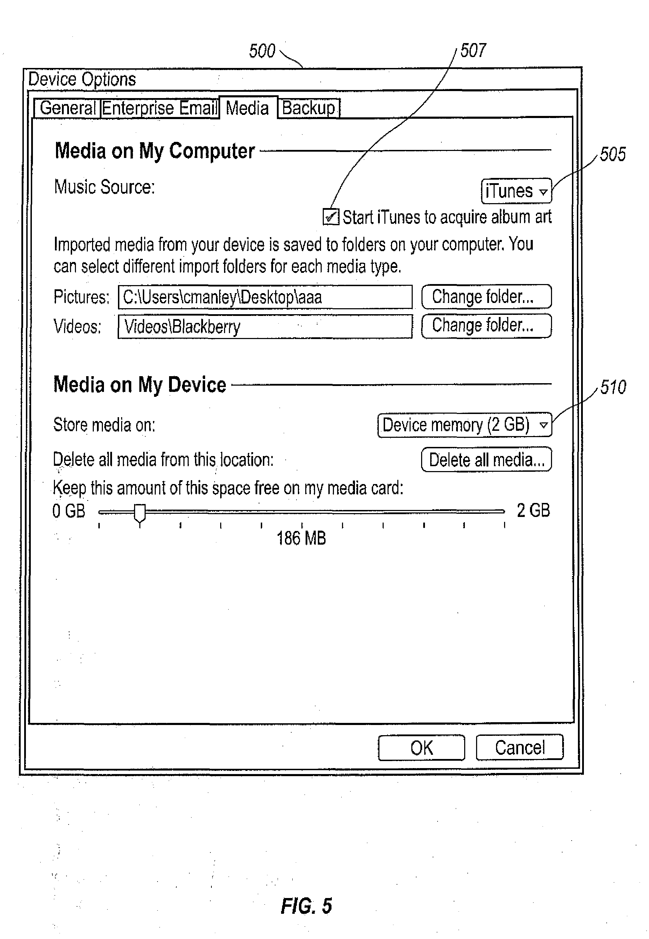

Figure 5 is an illustration of a graphical user interface 500, such as a dialogue box that can be presented on the display 210 of a management device 200. The graphical user interface 500 displays the settings for synchronizing the management device database 205 or library and the electronic device database 115 or library. In Figure 5, the graphical user interface 500 can allow the operator to select what media source 505 to retrieve the media art associated with the media, files. In the exemplary embodiment illustrated in Figure 5, the selected media source is a media management application, for example, iTunes™. Additionally, in Figure 5, the media source 505 is presented in a pull-down list of media source options; however, the media source options can be presented in any other manner, such as a displayed list, a grid, a list of radio buttons, a list with selectable check-boxes, or any other similar list of media source options. In the illustrated embodiment of Figure 5, there is a selectable option 507 to start or launch the media application to retrieve media art associated with the media files to be transferred to the electronic device 100. In Figure 5, the selectable option 507 is a check-box option but can also be a radio button, a toggle button, an option button, or any other selectable graphical element. Additionally, in at least one embodiment, the selectable option 507 can be default-selected.

Also illustrated n Figure 5, a memory list 510 that allows the operator of the electronic device 100 to choose or select the memory on which to store the media and media art. In the illustrated example, the memory list 510 is a pull-down menu, and the electronic device's internal memory has been selected as the memory to store media files and media art. In alternative embodiments, the media files and media art can be stored on a flash memory, a local cache, an external hard drive, a removable memory card, or any other memory associated with the electronic device 100.

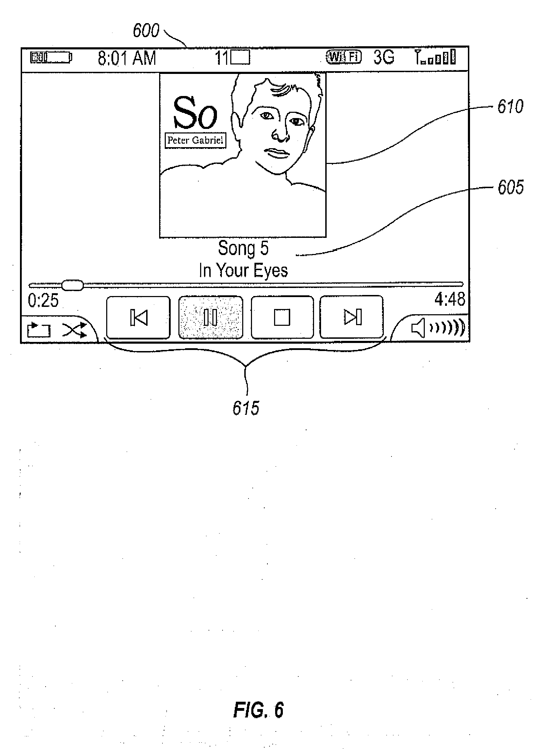

Figure 6 is an illustration of an exemplary display of an electronic device 100 configured to be coupled to a management device 200 for synchronization of media files between the electronic device 100 and the management device 200. In Figure 6, the electronic device 100 can be a mobile communication device, such as a smartphone. A media file 605, such as an audio music file, can be played on the electronic device. Media control buttons 615 which can include a play button, a pause button, a forward button, and a back button, or the like, are displayed on the display. Additionally, the title of the audio music file and the media art 610 associated with the audio music file can be displayed. As the electronic device is configured to synchronize the media files and media art as described herein, each media file played on the electronic device can have a media art 610 displayed on the display as the media file is played.

While the present disclosure has been described in relation to media files such as audio files, one of ordinary skill in the art will appreciate that the system and method of synchronizing media files and associated media art can be implemented using any type of data file having associated graphical art or graphical elements that will be displayed when the data file is opened or presented on the display of the electronic device. For example, the data file can be a MIDI file, an address book content file, an audiobook file, or any other data file having an associated graphical art.

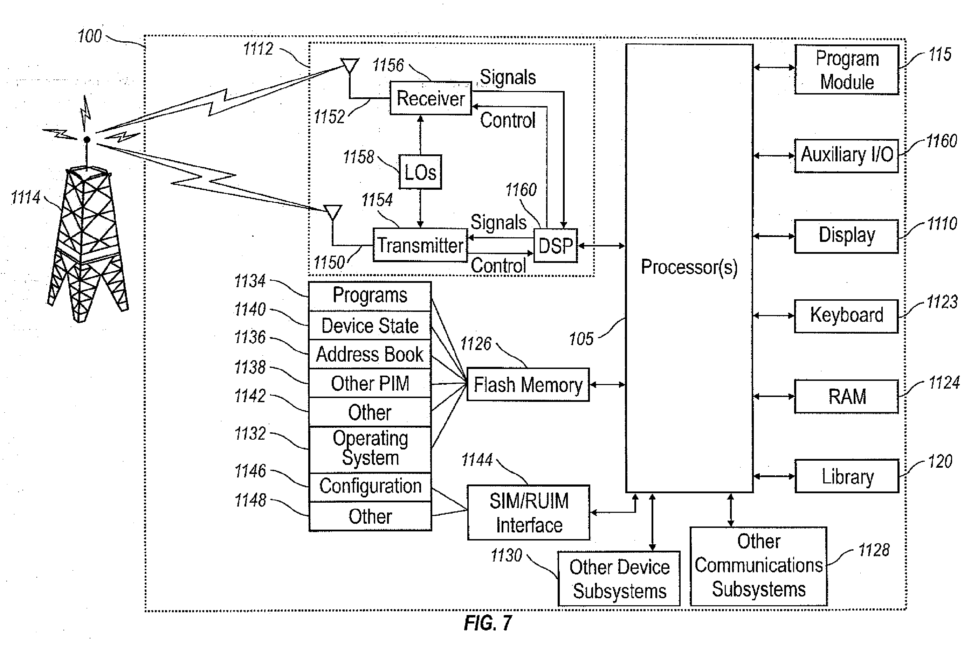

A mobile device 100, according to the present disclosure, can include components as illustrated in Figure 7. While the components of Figure 7 are not all inclusive, Figure 7 illustrates components that can be included on a mobile device 100 according to the present disclosure. Additional components are required to allow the mobile device 100 to function, but have been omitted for clarity.

As illustrated in Figure 7, the mobile device 100 includes a communication subsystem 1112 to perform all communication transmission and reception with a wireless network 1114. A processor module 105 can be connected with an auxiliary input/output (I/O) subsystem 1130 which can be connected to the mobile device 100. The processor module 105 can include one or more processors. Additionally, the processors can be micro-processors for example. In at least one implementation, the processor module 105 can be connected to a serial port (for example, a Universal Serial Bus port) which can allow for communication with other devices or systems. The display 110 can be connected to the processor module 105 to allow for displaying of information to a user of the mobile device 100. When the mobile device 100 is equipped with a keyboard 124, the keyboard 124 can also be connected with the processor module 105. The mobile device 100 can include a speaker 125, a microphone, random access memory (RAM) 1124, and flash memory 1126, all of which can be connected to the processor module 105. Other similar components can be provided on the mobile device 100 as well and optionally connected to the processor module 105. Other communication subsystems 1130 and other communication device subsystems 1128 are generally indicated as being functionally connected with the processor module 105 as well. An example of the communication subsystem 1112 is that of a short range communication system such as BLUETOOTH® communication module or a WI-FI® communication module (a communication module in compliance with IEEE 802.11 set of protocols) and associated circuits and components. The processor module 105 is able to perform operating system functions and enables execution of programs on the mobile device 100. In some implementations not all of the above components can be included in the mobile device 100.

The auxiliary I/O subsystem 1160 can take the form of a trackpad navigation tool, or a trackball, a thumbwheel, a navigation pad, a joystick, touch-sensitive interface, or other I/O interface. While the above examples have been provided in relation to the auxiliary I/O subsystem 1160, other subsystems capable of providing input or receiving output from the mobile device 100 are considered within the scope of this disclosure. Other keys can be placed along the side of the mobile device 100 to function as escape keys, volume control keys, scrolling keys, power switches, or user programmable keys, and can likewise be programmed accordingly.

Furthermore, the mobile device 100 is equipped with components to enable operation of various programs, as shown in Figure 7. In an exemplary implementation, the flash memory 1126 is enabled to provide a storage location for the operating system 1132, device programs 1134, and data. The operating system 1132 is generally configured to manage other programs 1142 that are also stored in memory 1126 and executable on the processor. The operating system 1132 honors requests for services made by programs 1134 through predefined program 1134 interfaces. More specifically, the operating system 1126 typically determines the order in which multiple programs 1134 are executed on the processor and the execution time allotted for each program 1134, manages the sharing of memory 1126 among multiple programs 1134, handles input and output to and from other device subsystems 1130, and so on. In addition, users can typically interact directly with the operating system 1132 through a user interface which can include the keyboard 124 and display screen 110. While in an exemplary implementation the operating system 1132 is stored in flash memory 1126, the operating system 1132 in other implementations is stored in read-only memory (ROM) or similar storage element (not shown). As those skilled in the art will appreciate, the operating system 1132, device program 1134 or parts thereof can be loaded in RAM 1124 or other volatile memory.

In one exemplary implementation, the flash memory 1126 contains programs 1134 for execution on the mobile device 100 including an address book 1136, a personal information manager (PIM) 1138, and the device state 1140. Furthermore, programs 1134 and other information 1148 including data can be segregated upon storage in the flash memory 1126 of the mobile device 100.

When the mobile device 100 is enabled for two-way communication within the wireless communication network 1114, the mobile device 100 can send and receive messages from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperability for Microwave Access (WiMAX), and other networks that can be used for data and voice, or just data or voice. For the systems listed above, the communication device 100 can require a unique identifier to enable the communication device 100 to transmit and receive messages from the communication network 1114. Other systems may not require such identifying information. GPRS, UMTS, and EDGE use a Subscriber Identity Module (SIM) in order to allow communication with the communication network 1114. Likewise, most CDMA systems use a Removable User Identity Module (RUIM) in order to communicate with the CDMA network. The RUIM and SIM card can be used in multiple different mobile devices 100. The mobile device 100 can be able to operate some features without a SIM/RUIM card, but the mobile device will not be able to communicate with the network 1114. A SIM/RUIM interface 1144 located within the mobile device 100 allows for removal or insertion of a SIM/RUIM card (not shown). The SIM/RUIM card features memory and holds key configurations 1146, and other information 1148 such as identification and subscriber related information. With a properly enabled mobile device 100, two-way communication between the mobile device 100 and communication network 1114 is possible.

If the mobile device 100 is enabled as described above or the communication network 1114 does not require such enablement, the two-way communication enabled mobile device 100 is able to both transmit and receive information from the communication network 1114. The transfer of communication can be from the mobile device 100 or to the mobile device 100. In order to communicate with the communication network 1114, the mobile device 100 in the presently described exemplary implementation is equipped with an integral or internal antenna 1150 for transmitting messages to the communication network 1114. Likewise the mobile device 100 in the presently described exemplary implementation is equipped with another antenna 1152 for receiving communication from the communication network 1114. These antennae (1152, 1150 in another exemplary implementation are combined into a single antenna (not shown). As one skilled in the art would appreciate, the antenna or antennae (1152, 1150) in another implementation are externally mounted on the mobile device 100.

When equipped for two-way communication, the mobile device 100 features the communication subsystem 1112. As is understood in the art, the communication subsystem 1112 is modified so that the subsystem 1112 can support the operational needs of the mobile device 100. The subsystem 1112 includes a transmitter 1154 and receiver 1156 including the associated antenna or antennae (152, 1150) as described above, local oscillators (LOs) 1158, and a processing module which in the presently described exemplary implementation is a digital signal processor (DSP) 1160.

The present disclosure contemplates that communication by the mobile device 100 with the wireless network 1114 can be any type of communication that both the wireless network 1114 and mobile device 100 are enabled to transmit, receive and process. In general, these can be classified as voice and data. Voice communication generally refers to communication in which messages for audible sounds are transmitted by the mobile device 100 through the communication network 1114. Data generally refers to all other types of communication that the mobile device 100 is capable of performing within the constraints of the wireless network 1114.

Example device programs that can depend on such data include email, contacts and calendars. For each such program, synchronization with home-based versions of the programs can be desirable for either or both of the program's long term and short term utility. As an example, emails are often time sensitive, so substantially real time synchronization can be desired. Contacts, on the other hand, can be usually updated less frequently without inconvenience. Therefore, the utility of the mobile device 100 is enhanced when connectable within a communication system, and when connectable on a wireless basis in the network 1114 in which voice, text messaging, and other data transfer are accommodated.

The technology described herein can take the forms of hardware, software or both hardware and software elements. In some implementations, the technology is implemented in software, which includes, but is not limited to, firmware, resident software, microcode, a Field Programmable; Gate Array (FPGA) or Application-Specific Integrated Circuit (ASIC), etc. In particular, for real-time or near real-time use, an FPGA or ASIC implementation is desirable.

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums as signal carriers per se are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disks - read/write (CD-R/W) and DVD. Both processors and program code for implementing each as aspect of the technology can be centralized or distributed (or a combination thereof) as known to those skilled in the art. Additionally, the memory can be a non-transitory computer readable medium and can include processor executable instructions and data structures that implement aspect of the subject innovation.

The technology can take the forms of hardware, or both hardware and software elements. In some implementations, the technology is implemented in software, which includes but is not limited to firmware, resident software, microcode, a Field Programmable Gate Array (FPGA) or Application-Specific Integrated Circuit (ASIC), etc. In particular, for real-time or near real-time use, an FPGA or ASIC implementation is desirable,

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums as signal carriers per se are not included in the definition of physical computer-readable medium). Examples of a physical computer-readable medium include a semiconductor or solid state memory, removable memory connected via USB, magnetic tape, a removable computer diskette, a random access memory (RAM), a read-only memory (ROM), a rigid magnetic disk, an optical disk, transitory memory, and non-transitory memory. Current examples of optical disks include compact disk - read only memory (CD-ROM), compact disk - read/write (CD-R/W), DVD, and Blu Ray^{™}. Additionally, Non-transitory memory also can store programs, device state, various user information, one or more operating systems, device configuration data, and other data that may need to be accessed persistently. Both processors and program code for implementing each medium as an aspect of the technology can be centralized or distributed (or a combination thereof) as known to those skilled in the art.

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem, WiFi, and Ethernet cards are just a few of the currently available types of network adapters. Such systems can be centralized or distributed, e.g., in peer-to-peer and client/server configurations. In some implementations, the data processing system is implemented using one or both of FPGAs and ASICs.

Exemplary implementations have been described hereinabove regarding system and method for synchronizing media files and media art on electronic devices. With the system and method for synchronizing media files and media art, fewer steps are required to synchronize media files and media art when synchronizing an electronic device with a management device. Therefore, less user frustration and more efficient synchronization is provided to the user of the electronic device. Various modifications to and departures from the disclosed implementations will occur to those having skill in the art. The subject matter that is intended to be within the spirit of this disclosure is set forth in the following claims.

## Claims

1. An electronic device (100) configured to be communicatively coupled to a management device (200), said electronic device (100) comprising:
a processor (105);
at least one computer readable medium (110) communicatively coupled to the processor (105);
an electronic device media library (120) stored on the at least one computer readable medium (110); and
at least one program module (115) stored on the at least one computer readable medium (110), said at least one program module (115) operable, upon execution by the processor (105), to:
display (420), on a display (210) of the management device (200), a graphical user interface (220) displaying a management device media library (205);
receive (320) at least one media file (605) from the management device media library (205);
store the at least one media file (605) in the electronic device media library (120);
determine (325) whether media art (610) is associated with the at least one media file (605); and
retrieve (335) the associated media art (610) from a media source (215) in response to the determination that no media art is associated with the at least one media file (605).

2. The electronic device as recited in claim 1, wherein the graphical user interface (220) displays at least a portion of the electronic device media library (120).

3. The electronic device as recited in any one of the preceding claims, wherein the electronic media library (120) is a database of media files stored on the electronic device (100), and the management device media library (206) is a database of media files stored on the management device (200).

4. The electronic device in any one of the preceding claims, wherein the media file (605) is at least one of an audio file and a video file.

5. The electronic device in any one of the preceding claims, wherein the media art (610) is one of an album art, a cover art, a video art, a movie screenshot, a picture file, and a graphical icon associated with the media file.

6. The electronic device in any one of the preceding claims, wherein the media source (120) is one of an external media resource, an internet site, a media management application, and a memory associated with the management device.

7. The electronic device in any one of the preceding claims, wherein the program module (215) is further operable, upon execution by the processor (105), to store the associated media art (610) a local memory (1126) associated with the computer readable medium (110).

8. The electronic device in any one of the preceding claims, wherein the program module (115) is further operable, upon execution by the processor (105), to receive an input at the electronic device (100) to retrieve the associated media art (610) in the event no media art is associated with the at least one media file (605).

9. The electronic device in any one of the preceding claims, wherein retrieving the associated media art (610) if no media art is associated with the at least one media file (605) is a user-selectable option (507).

10. A method of synchronizing datafiles on an electronic device, said method comprising:
detecting (405) a connection between the electronic device (100) and a management device (200);
updating (425) an electronic data library (120) of the electronic device (100) to include at least one data file (605) from a management data library (205) of the management device (200);
determining (425) whether the at least one data file (605) is associated with graphical art (610); and
retrieving (450) an associated graphical art (610) in the event that the determination is made that no graphical art is associated with the at least one data file (605).

11. The method as recited in claim 10 further comprising receiving an input at the electronic device (100) to retrieve the associated graphical art (610) if no graphical art is associated with the at least one data file (605).

12. The method as recited in any one of claims 10-11 further comprising storing the associated graphical art (610) in a local memory coupled to the electronic device (100).

13. A computer readable medium storing computer executable instructions for the method of claim 11.

14. The computer readable medium as recited in claim 13 further comprising storing the associated graphic in the electronic device database.

15. The computer readable medium as recited in any one of claims 13-14 further comprising:
accessing an associated graphic database on the electronic device, wherein the associated graphic database comprises a plurality of associated graphics associated with a plurality of datafiles present in the electronic device database; and
transferring to the associated graphic database, at least one associated graphic that is present in the management device database but not the associated graphic database.

## Amended claims

### Amended claims in accordance with Rule 137(2) EPC.

**1.** An electronic device (100) configured to be communicatively coupled to a management device (200), said electronic device (100) comprising:
a processor (105);
at least one computer readable medium (110) communicatively coupled to the processor (105);
an electronic device media library (120) stored on the at least one computer readable medium (110); and
at least one program module (115) stored on the at least one computer readable medium (110), said at least one program module (115) operable, upon execution by the processor (105), to:
display (420), on a display (210) of the management device (200), a graphical user interface (220) displaying a management device media library (205);
receive (320) at least one media file (605) from the management device media library (205);
store the at least one media file (605) in the electronic device media library (120);
determine (325) whether media art (610) is associated with the at least one media file (605); and
retrieve (335) the associated media art (610) from a media source (215) in response to the determination that no media art is associated with the at least one media file (605);
wherein the media source (120) is one of an external media resource, an internet site, and an external memory associated with the management device.

**2.** The electronic device as recited in claim 1, wherein the graphical user interface (220) displays at least a portion of the electronic device media library (120).

**3.** The electronic device as recited in any one of the preceding claims, wherein the electronic media library (120) is a database of media files stored on the electronic device (100), and the management device media library (206) is a database of media files stored on the management device (200).

**4.** The electronic device in any one of the preceding claims, wherein the media file (605) is at least one of an audio file and a video file.

**5.** The electronic device in any one of the preceding claims, wherein the media art (610) is one of an album art, a cover art, a video art, a movie screenshot, a picture file, and a graphical icon associated with the media file.

**6.** The electronic device in any one of the preceding claims, wherein the program module (215) is further operable, upon execution by the processor (105), to store the associated media art (610) a local memory (1126) associated with the computer readable medium (110).

**7.** The electronic device in any one of the preceding claims, wherein the program module (115) is further operable, upon execution by the processor (105), to receive an input at the electronic device (100) to retrieve the associated media art (610) in the event no media art is associated with the at least one media file (605).

**8.** The electronic device in any one of the preceding claims, wherein retrieving the associated media art (610) if no media art is associated with the at least one media file (605) is a user-selectable option (507).

**9.** A method of synchronizing datafiles on an electronic device, said method comprising:
detecting (405) a connection between the electronic device (100) and a management device (200);
updating (425) an electronic data library (120) of the electronic device (100) to include at least one data file (605) from a management data library (205) of the management device (200);
determining (425) whether the at least one data file (605) is associated with graphical art (610); and
retrieving (450) an associated graphical art (610) in the event that the determination is made that no graphical art is associated with the at least one data file (605), wherein the associated graphical art is retrieved from one of an external media resource, an internet site, and an external memory associated with the management device.

**10.** The method as recited in claim 9 further comprising receiving an input at the electronic device (100) to retrieve the associated graphical art (610) if no graphical art is associated with the at least one data file (605).

**11.** The method as recited in any one of claims 9-10 further comprising storing the associated graphical art (610) in a local memory coupled to the electronic device (100).

**12.** A computer readable medium storing computer executable instructions for the method of claim 10.

**13.** The computer readable medium as recited in claim 12 further comprising storing the associated graphic in the electronic device database.

**14.** The computer readable medium as recited in any one of claims 12-13 further comprising:
accessing an associated graphic database on the electronic device, wherein the associated graphic database comprises a plurality of associated graphics associated with a plurality of datafiles present in the electronic device database; and
transferring to the associated graphic database, at least one associated graphic that is present in the management device database but not the associated graphic database.
